# EUROPÄISCHE PATENTSCHRIFT

(11) **EP 2 449 945 B1**
(45) Veröffentlichungstag und Bekanntmachung des Hinweises auf die Patenterteilung: **29.07.2020**
(21) Anmeldenummer: 12000566.5
(22) Anmeldetag: 30.01.2012
(51) Int. Cl.: A47L 15/42, A47L 15/48, D06F 39/00

(54) **Haushaltgerät mit Wärmepumpe am Prozesswasserkreislauf**
Domestic appliance with heat pump on process water circuit
Appareil ménager doté d'une pompe à chaleur sur le circuit d'eau de traitement

(43) Veröffentlichungstag der Anmeldung: 09.05.2012
(73) Patentinhaber: V-Zug AG, 6300 Zug (CH)
(72) Erfinder: Loichinger, Albert Johann, 8135 Langnau am Albis (CH); Dober, Ernst, 6036 Dierikon (CH); Bon, Patrick, 8810 Horgen (CH)
(74) Vertreter: Sutter, Kurt

(56) Entgegenhaltungen:
- EP-A1- 2 192 370
- EP-A1- 2 215 954
- EP-A2- 2 206 824
- DE-A1-102007 060 196
- DE-A1-102009 011 571
- JP-A- 2007 215 887

## Beschreibung

### Gebiet der Erfindung

Die Erfindung betrifft ein Wasser führendes Haushaltsgerät, insbesondere einen Geschirrspüler, mit einem Bottich zur Aufnahme von zu reinigendem Gut und mit einem Prozesswasserkreislauf umfassend ein Zirkulationsleitungssystem und eine Zirkulationspumpe, um Prozesswasser aus einem unteren Bereich des Bottichs nach oben zu fördern. Weiter ist das Haushaltgerät mit einer Wärmepumpe umfassend einen Kondensator und einen Verdampfer ausgestattet, wobei der Kondensator dazu ausgestaltet ist, das Prozesswasser zu erwärmen.

### Hintergrund

Ein Gerät dieser Art ist z.B. aus EP 2 215 954 bekannt. Dabei dient die Wärmepumpe dazu, die Energieeffizienz des Geräts zu verbessern. Der Kondensator der Wärmepumpe ist an der Bottichwand oder zwischen dem Sumpf des Bottichs und der Zirkulationspumpe angeordnet.

In EP 2 206 824 A2 ist ein Haushaltsgerät beschrieben, bei dem der Kondensator der Wärmepumpe zwischen dem Sumpf des Bottichs und der Zirkulationspumpe bzw. an einem Verteilerarm im Zirkulationskreis angeordnet ist.

### Darstellung der Erfindung

Es stellt sich die Aufgabe, die Effizienz eines solchen Geräts zu verbessern.

Diese Aufgabe wird vom Gerät gemäss Anspruch 1 gelöst. Demgemäss ist der Kondensator am Zirkulationsleitungssystem zwischen der Zirkulationspumpe und dem Bottich angeordnet. Dies ist so zu verstehen, dass das Gerät so ausgestaltet ist, dass (zumindest wenn die Wärmepumpe das Prozesswasser aufzuheizen hat) mindestens ein Teil des Prozesswassers auf seinem Weg zwischen der Zirkulationspumpe und dem Bottich in Wärme leitenden Kontakt mit dem Kondensator gebracht werden kann.

Das Gerät besitzt mehrere Mündungen (z.B. Düsen und andere Öffnungen), durch welche das Prozesswasser aus dem Zirkulationsleitungssystem in den Bottich gepumpt werden kann. Weiter ist eine Verzweigung im Zirkulationsleitungssystem vorgesehen, welche über mehrere Verbindungsleitungen mit den Mündungen verbunden ist. Dabei ist zwischen der Zirkulationspumpe und der Verzweigung eine Leitung zum Bottich oder saugseitig zur Zirkulationspumpe abgezweigt, in welcher der Kondensator angeordnet wird, mit einem zusätzlichen Ventil, welches erlaubt, die Leitung zu verschliessen und somit den Kondensator jederzeit ein- oder abzuschalten.

Besonders vorteilhaft ist diese Variante, wenn in der Verzweigung ein Umschaltventil angeordnet ist, mit welchem das Wasser wahlweise zu unterschiedlichen Mündungen geführt werden kann. Dadurch wird die Flexibilität zur Optimierung der Wärmeeinkopplung weiter verbessert werden, indem wahlweise Wasser durch den Kondensator geführt werden kann oder nicht.

Weiter können im Bottich, wie bei Geschirrspülern üblich, ein unterer und ein oberer Sprüharm (und allenfalls weitere Sprüharme oder Sprühdüsen) vorgesehen sein. Die Verzweigung ist über eine untere Verbindungsleitung mit dem unteren Sprüharm und über eine obere Verbindungsleitung mit dem oberen Sprüharm verbunden.

Generell kann gesagt werden, dass eine Abzweigung vorgesehen wird, die am Zirkulationsleitungssystem angeordnet ist und von welcher Prozesswasser sowohl über eine Verbindungsleitung als auch über eine Bypassleitung in den Bottich fliessen kann. Der Kondensator ist an dieser Bypassleitung angeordnet. Dies hat den Vorteil, dass das Prozesswasser immer zwei Wege zur Verfügung hat. Wie unten genauer beschrieben, kann dadurch die Verschmutzungsanfälligkeit des Systems reduziert werden.

Die genannte Abzweigung weist vorteilhaft ein Sieb auf. Dieses ist so platziert, dass in die Bypassleitung fliessendes Prozesswasser das Sieb passiert, nicht aber in die Verbindungsleitung fliessendes Prozesswasser. Dadurch wird verhindert, dass gröbere Verschmutzungen zum Kondensator gelangen und sich dort ansammeln, wo sie schwer entfernt werden können. Vielmehr werden sie in die Verbindungsleitung gespült.

Die Erfindung ist besonders zur Verwendung in einem Geschirrspüler geeignet. Denkbar ist aber z.B. auch die Verwendung in einer Waschmaschine.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine schematische Darstellung eines Geschirrspülers,
Fig. 2 die Ansicht einer Abzweigung,
Fig. 3 eine geschnittene Ansicht der Abzweigung,
Fig. 4 eine anders geschnittene Ansicht der Abzweigung,
Fig. 5 eine Draufsicht auf die Abzweigung,
Fig. 6 einen Schnitt durch die Abzweigung,
Fig. 7 eine Anordnung der Sieböffnungen der Abzweigung und
Fig. 8 eine andere Ausführung der Abzweigung. Wege zur Ausführung der Erfindung

### Definitionen:

Begriffe wie "vor", "nach", "zwischen", etc., welche Orte im Zirkulationsleitungssystem definieren, beziehen sich auf den Pfad des Prozesswassers im Zirkulationsleitungssystem. Zuvorderst im Zirkulationsleitungssystem steht die Mündung der Leitung, durch welche das Prozesswasser aus dem Bottich abgesaugt wird, und zuhinterst stehen die Mündungen, durch welche das Prozesswasser zurück in den Bottich gepumpt wird.

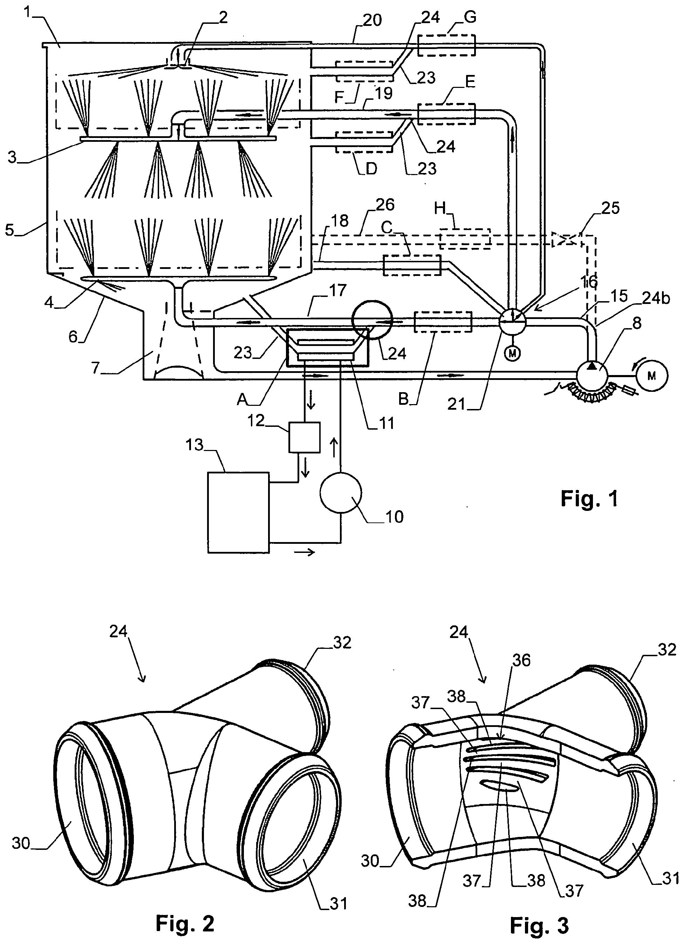

Fig. 1 illustriert verschiedene Ausführungen der Erfindung an einem Geschirrspüler. Dieser besitzt einen Bottich 1 zur Aufnahme des Spülguts. Im Bottich 1 sind mehrere Mündungen (Düsen oder andere Öffnungen) angeordnet. Mindestens ein Teil davon ist als Düsen ist so ausgestaltet, dass das Spülgut mit Prozesswasser beaufschlagt wird und dass auch Schmutzpartikel, welche sich im Prozesswasser befinden, austreten können. Diese Düsen werden von einer Deckendüse 2, einem oberen Sprüharm 3 und einem unteren Sprüharm 4 gebildet. Die Sprüharme 3, 4 sind in bekannter Weise zwischen zwei Geschirrkörben bzw. unterhalb des unteren Geschirrkorbs angeordnet, wobei die Geschirrkörbe in Fig. 1 nicht dargestellt sind.

Der Bottich 1 ist seitlich durch Wände 5 und nach unten durch einen Bodenbereich 6 abgeschlossen, wobei er an einem tiefsten Punkt einen Sumpf 7 bildet, in welchen das Prozesswasser abläuft.

Das Prozesswasser wird in einem Prozesswasserkreislauf umgepumpt. Dieser umfasst eine Zirkulationspumpe 8, welche das Prozesswasser über ein Zirkulationsleitungssystem aus dem unteren Bereich des Bottichs 1, namentlich dem Sumpf 7, nach oben zu den Mündungen zu fördert.

Weiter besitzt das Gerät eine Wärmepumpe umfassend einen Kompressor 10, einen Kondensator 11, ein Expansionsventil (bzw. eine Kapillare) 12 sowie einen Verdampfer 13. Die Wärmepumpe wird dazu verwendet, das Prozesswasser zu heizen. Hierzu ist der Kondensator 11 thermisch mit dem Zirkulationsleitungssystem zwischen der Zirkulationspumpe 8 und dem Bottich 1 gekoppelt, um dort das Prozesswasser zu erwärmen. Der Verdampfer 13 kann z.B. mit einem Latentwärmespeicher (oder einer anderen grossen thermischen Masse) und/oder mit dem Abwassersystem des Geräts gekoppelt sein, um diesem Wärme zu entziehen.

Bei einem Gerät dieser Art stellt sich die Frage, wo der Kondensator 11 im Zirkulationsleitungssystem angeordnet werden soll. Hierzu soll zunächst das Zirkulationsleitungssystem des Geräts näher beschrieben werden.

Das Zirkulationsleitungssystem umfasst eine erste Verbindungsleitung 15, über welche das Prozesswasser von der Zirkulationspumpe 8 zu einer Verzweigung 16 geführt werden kann. Die Verzweigung 16 ist sodann über mehrere Verbindungsleitungen 17 - 20 mit den Düsen verbunden.

In der dargestellten Ausführung ist in der Verzweigung 16 ein Umschaltventil 21 vorgesehen, um das Wasser über die verschiedenen Verbindungsleitungen 17 - 20 zu den unterschiedlichen Mündungen zu führen. Das Umschaltventil 21 kann so ausgestaltet sein, dass das Prozesswasser jeweils nur einer Verbindungsleitung zugeführt wird, oder auch so, dass das Prozesswasser mehreren Verbindungsleitungen gleichzeitig zuführbar ist. Entsprechende Anordnungen sind dem Fachmann bekannt und brauchen hier nicht genauer beschrieben zu werden.

Wie oben erwähnt, ist der Kondensator 11 am Zirkulationssystem zwischen der Zirkulationspumpe 8 und dem Bottich 1 angeordnet. Fig. 1 zeigt hierzu verschiedene Varianten A, B, C, D, E, F, G, H, von denen die vorliegende Erfindung die Variante H umfasst. Die Variante H wird im Folgenden genauer beschrieben.

Bei der Variante H wird der Volumenstrom für den Kondensator 11 vor der Verzweigung 16 abgenommen und in den Bodenbereich 6 (oder Sumpf 7 oder Wand 5 oder saugseitig zur Zirkulationspumpe 8) geführt. Hierzu ist eine separate Leitung 26 vorgesehen, welche von einer Abzweigung zwischen dem Zirkulationspumpe 8 und der Verzweigung 16 direkt zum Bottich oder saugseitig zur Zirkulationspumpe 8 führt. In dieser Leitung 26 ist ein Ventil 25 vorgesehen, mit welchem die Leitung verschlossen werden kann. Mit dieser Anordnung kann der Kondensator 11 jederzeit zu- oder abgeschaltet werden, unabhängig von der Stellung des Umschaltventils 21 in der Verzweigung 16. Dieses System benötigt aber das zusätzliche Stellventil 25. Das unten beschriebene Filter kann in diesem Fall bei der Abzweigung 24b vorgesehen sein.

Selbstverständlich sind die verschiedenen Bypassleitungen 23 und Abzweigungen 24 gemäss Fig. 1 jeweils nur dann erforderlich, wenn auch in der jeweiligen Bypassleitung 23 ein Kondensator 11 angeordnet wird. Ansonsten können sie entfallen. Die Bypassleitungen münden, soweit sie benötigt werden, vorzugsweise in die Wand 5, den Bodenbereich 6 oder den Sumpf 7 des Bottichs 1 oder saugseitig zur Zirkulationspumpe 8. Vorzugsweise tritt der Wasserstrom durch den Bypass direkt in den Ansaugstutzen der Pumpe ein, um den Wasserkreis dieses Teiles möglichst kurz und damit verlustarm zu halten.

Die Varianten A, D, H und F benötigen jeweils die Abzweigung 24 bzw. 24b. Eine besonders vorteilhafte Ausführung dieser Abzweigung wird im Folgenden beschrieben. Die Abzweigung 24, welche in Fig. 2 - 6 dargestellt ist, dient dazu, einen Teil des Wassers in die Bypassleitung 23 abzuzweigen. Es handelt sich vorzugsweise um ein rein passives Bauteil, d.h. es ist kein Stellglied vorhanden, mit welchem das Teilungsverhältnis zwischen abgezweigtem und nicht abgezweigten Wasser beeinflusst werden könnte.

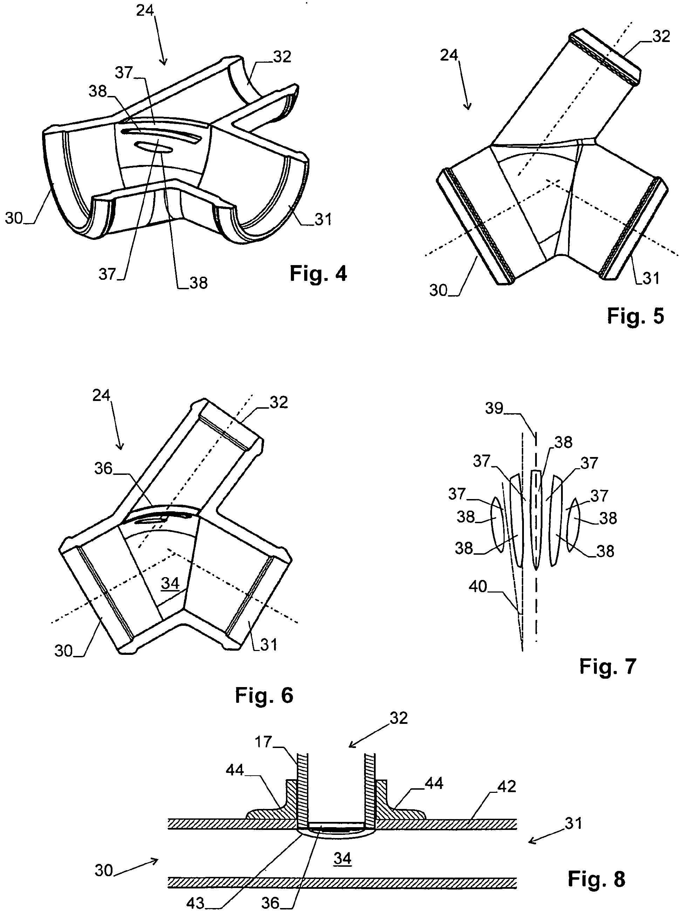

Die Abzweigung 24 bzw. 24b besitzt einen Eingang 30, einem ersten Ausgang 31 und einem zweiten Ausgang 32. Der Eingang 30 ist über die Verbindungsleitung 15 mit der Verzweigung 16 bzw. dem Umschaltventil 21 verbunden (bzw. mit der Zirkulationspumpe in Variante H). Am ersten Ausgang 31 schliesst die Verbindungsleitung 17 (bzw. 19, 20, 15 in den Varianten D, F und H) an und am zweiten Ausgang 32 die Bypassleitung 23 (bzw. die Leitung 26 in der Variante H). Zwischen dem Eingang 30 und dem ersten Ausgang 31 bildet die Abzweigung 24 eine vorzugsweise abgewinkelte Rohrleitung 34 (Fig. 6). An der Wandung dieser Rohrleitung ist ein Sieb 36 angeordnet, das die Mündung des zweiten Ausgangs 32 in die Rohrleitung 34 bedeckt.

Diese Ausgestaltung hat den Vorteil, dass keine Verschmutzungen, die zur Bildung von Ablagerung neigen könnten, in die Bypassleitung 23 beziehungsweise in die Leitung 26 und somit den Wärmetauscher zum Kondensator 11 gelangen können, wo sie nur schwer zu entfernen wären. Vielmehr werden derartige Verschmutzungen vom Sieb 36 zurückgehalten und können vom Prozesswasser durch den ersten Ausgang 31 weggetragen werden. Deshalb ist es von Vorteil, wenn zwischen dem Eingang 30 und dem ersten Ausgang 31 kein Sieb angeordnet ist.

Wie am besten aus Fig. 3 und 7 ersichtlich, weist das Sieb 36 mehrere Rippen 37 auf, zwischen denen längliche Sieböffnungen 38 zum Durchtritt des Prozesswassers gebildet werden. Die Rippen 37 verlaufen im Wesentlichen parallel zur Längsachse 39 der Rohrleitung 34, d.h. in der Projektion auf die Siebebene (Fig. 7) beträgt der Winkel 40 zwischen der Längsachse 39 und den Rippen 37 vorzugsweise höchstens 30°, insbesondere höchstens 15°.

Durch diese im Wesentlichen parallele Anordnung der Rippen 37 zur Längsachse 39 wird die Gefahr eines Festhängens von Verschmutzungen reduziert, und gleichzeitig wird dank der länglichen Löcher ein relativ grosser Durchflussquerschnitt erreicht. Denkbar ist auch eine Anordnung in beliebigem Winkel und Geometrie (z.B. quadratische Öffnungen 38), wobei darauf geachtet werden muss, dass einerseits kein Schmutz im Abzweiger hängen bleibt und andererseits der erforderliche Volumenstrom durch den Ausgang 32 abströmt.

Wie insbesondere aus Fig. 6 ersichtlich, ist das Sieb 36 im Wesentlichen bündig zur Wandung der Rohrleitung 34 angeordnet. Auch dadurch kann die Gefahr eines Festhängens von Verschmutzungen reduziert werden.

Das Teilungsverhältnis zwischen abgezweigtem und nicht abgezweigtem Wasser kann durch die relativen Strömungswiderstände des Prozesswassers auf seinen beiden Wegen eingestellt werden. Vorzugsweise sind die Strömungswiderstände so bemessen, dass mehr Prozesswasser durch die Verbindungsleitung 17 (bzw. 19, 20) als durch die Bypassleitung 23 fliesst. Es zeigt sich, dass dies für eine Aufheizung des Prozesswassers ausreicht. Vorzugsweise beträgt das Teilungsverhältnis zwischen dem Prozesswasserstrom in der Verbindungsleitung 17 (bzw. 19, 20) und der Bypassleitung 23 mindestens 2:1, insbesondere ca. 3:1. Beispielsweise kann im Normalbetrieb des Geräts der Fluss durch die Verbindungsleitung 17 auf ca. 35 Liter/Minute und jener durch den Bypass auf ca. 10 Liter/Minute eingestellt werden.

In der Ausführung nach Fig. 2 - 6 wird die Abzweigung 24 von einem einstückigen Bauteil gebildet, z.B. einem Spritzgussbauteil. Eine alternative Lösung ist in Fig. 8 dargestellt. Hier wird die Rohrleitung 34 von einem Schlauch 42 gebildet, der eine seitliche Öffnung 43 besitzt. Um die Öffnung 43 herum ist aussenseitig ein Anschlussstutzen 44 aufgeschweisst oder angespritzt, in welchem das Ende der Bypassleitung 17 (bzw. 19, 20) abgedichtet gehalten wird. Die Mündung der Bypassleitung 17 ist im Bereich der Wandung des Schlauchs 42 angeordnet und nimmt das Sieb 36 auf.

In den vorangehenden Ausführungen wurde die Erfindung anhand eines Geschirrspülers dargestellt. Sie kann jedoch auch bei einer Waschmaschine eingesetzt werden, soweit diese einen Prozesswasserkreislauf mit Zirkulationsleitungssystem und Zirkulationspumpe besitzt. Insbesondere ist auch dort der Einsatz der oben beschriebenen Abzweigung 24 von besonderem Vorteil.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

Diese Ausgestaltung hat den Vorteil, dass keine Verschmutzungen, die zur Bildung von Ablagerung neigen könnten, in die Bypassleitung 23 und somit den Wärmetauscher zum Kondensator 11 gelangen können, wo sie nur schwer zu entfernen wären. Vielmehr werden derartige Verschmutzungen vom Sieb 36 zurückgehalten und können vom Prozesswasser durch den ersten Ausgang 31 weggetragen werden. Deshalb ist es von Vorteil, wenn zwischen dem Eingang 30 und dem ersten Ausgang 31 kein Sieb angeordnet ist.

Wie am besten aus Fig. 3 und 7 ersichtlich, weist das Sieb 36 mehrere Rippen 37 auf, zwischen denen längliche Sieböffnungen 38 zum Durchtritt des Prozesswassers gebildet werden. Die Rippen 37 verlaufen im Wesentlichen parallel zur Längsachse 39 der Rohrleitung 34, d.h. in der Projektion auf die Siebebene (Fig. 7) beträgt der Winkel 40 zwischen der Längsachse 39 und den Rippen 37 vorzugsweise höchstens 30°, insbesondere höchstens 15°.

Durch diese im Wesentlichen parallele Anordnung der Rippen 37 zur Längsachse 39 wird die Gefahr eines Festhängens von Verschmutzungen reduziert, und gleichzeitig wird dank der länglichen Löcher ein relativ grosser Durchflussquerschnitt erreicht. Denkbar ist auch eine Anordnung in beliebigem Winkel und Geometrie (z.B. quadratische Öffnungen 38), wobei darauf geachtet werden muss, dass einerseits kein Schmutz im Abzweiger hängen bleibt und andererseits der erforderliche Volumenstrom durch den Ausgang 32 abströmt.

Wie insbesondere aus Fig. 6 ersichtlich, ist das Sieb 36 im Wesentlichen bündig zur Wandung der Rohrleitung 34 angeordnet. Auch dadurch kann die Gefahr eines Festhängens von Verschmutzungen reduziert werden.

Das Teilungsverhältnis zwischen abgezweigtem und nicht abgezweigten Wasser kann durch die relativen Strömungswiderstände des Prozesswassers auf seinen beiden Wegen eingestellt werden. Vorzugsweise sind die Strömungswiderstände so bemessen, dass mehr Prozesswasser durch die Verbindungsleitung 17 (bzw. 19, 20) als durch die Bypassleitung 23 fliesst. Es zeigt sich, dass dies für eine Aufheizung des Prozesswassers ausreicht. Vorzugsweise beträgt das Teilungsverhältnis zwischen dem Prozesswasserstrom in der Verbindungsleitung 17 (bzw. 19, 20) und der Bypassleitung 23 mindestens 2:1, insbesondere ca. 3:1. Beispielsweise kann im Normalbetrieb des Geräts der Fluss durch die Verbindungsleitung 17 auf ca. 35 Liter/Minute und jener durch den Bypass auf ca. 10 Liter/Minute eingestellt werden.

In der Ausführung nach Fig. 2 - 6 wird die Abzweigung 24 von einem einstückigen Bauteil gebildet, z.B. einem Spritzgussbauteil. Eine alternative Lösung ist in Fig. 8 dargestellt. Hier wird die Rohrleitung 34 von einem Schlauch 42 gebildet, der eine seitliche Öffnung 43 besitzt. Um die Öffnung 43 herum ist aussenseitig ein Anschlussstutzen 44 aufgeschweisst oder angespritzt, in welchem das Ende der Bypassleitung 17 (bzw. 19, 20) abgedichtet gehalten wird. Die Mündung der Bypassleitung 17 ist im Bereich der Wandung des Schlauchs 42 angeordnet und nimmt das Sieb 36 auf.

In den vorangehenden Ausführungen wurde die Erfindung anhand eines Geschirrspülers dargestellt. Sie kann jedoch auch bei einer Waschmaschine eingesetzt werden, soweit diese einen Prozesswasserkreislauf mit Zirkulationsleitungssystem und Zirkulationspumpe besitzt. Insbesondere ist auch dort der Einsatz der oben beschriebenen Abzweigung 24 von besonderem Vorteil.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Wasser führendes Haushaltsgerät, insbesondere Geschirrspüler, mit einem Bottich (1) zur Aufnahme von zu reinigendem Gut, mit einem Prozesswasserkreislauf umfassend ein Zirkulationsleitungssystem (15 - 20) und eine Zirkulationspumpe (8), um Prozesswasser aus einem unteren Bereich des Bottichs (1) nach oben zu fördern, mit einer Wärmepumpe (10 - 13) umfassend einen Kondensator (11) und einen Verdampfer (13), wobei der Kondensator (11) dazu ausgestaltet ist, das Prozesswasser zu erwärmen, und wobei der Kondensator (11) am Zirkulationsleitungssystem (15 - 20, 26) zwischen der Zirkulationspumpe (8) und dem Bottich (1) angeordnet ist, mit mehreren Mündungen, durch welche das Prozesswasser aus dem Zirkulationsleitungssystem (15 - 20) in den Bottich (1) pumpbar ist, und mit einer Verzweigung (16), welche über mehrere Verbindungsleitungen (17 - 20) mit den Mündungen verbunden ist, **dadurch gekennzeichnet, dass** zwischen der Zirkulationspumpe (8) und der Verzweigung (16) eine Abzweigung (24b) angeordnet ist, von welcher eine Leitung (26) zum Bottich (1) oder saugseitig zur Zirkulationspumpe (8) abgezweigt ist, wobei der Kondensator (11) in der Leitung (26) angeordnet ist und die Leitung (26) mit einem Ventil (25) verschliessbar ist.

2. Haushaltsgerät nach Anspruch 1, wobei die Abzweigung (24b) ein Sieb (36) aufweist, wobei in die Leitung (26) fliessendes Prozesswasser das Sieb (36) passiert, nicht aber in die Verbindungsleitung (15 ) fliessendes Prozesswasser.

3. Haushaltsgerät nach Anspruch 2, wobei die Abzweigung (24b) einen Eingang (30) und einen ersten und einen zweiten Ausgang (31, 32) aufweist, wobei am ersten Ausgang (31) die Verbindungsleitung (15) anschliesst und am zweiten Ausgang (32) die Leitung (26), wobei die Abzweigung (24b) zwischen dem Eingang (30) und dem ersten Ausgang (31) eine Rohrleitung (34) bildet, an deren Wandung das Sieb (36) angeordnet ist.

4. Haushaltgerät nach Anspruch 3, wobei das Sieb (36) Rippen (37) aufweist, zwischen denen längliche Sieböffnungen (38) zum Durchtritt des Prozesswassers gebildet sind, wobei die Rippen (37) im Wesentlichen parallel zu einer Längsachse (39) der Rohrleitung (34) verlaufen.

5. Haushaltgerät nach einem der Ansprüche 3 oder 4, wobei das Sieb (36) bündig zur Wandung angeordnet ist.

6. Haushaltsgerät nach einem der Ansprüche 2 bis 5, wobei die Leitung (26) in den Bottich (1) mündet, insbesondere in eine Wand (5), einen Bodenbereich (6) oder einen Sumpf (7) des Bottichs (1), oder wobei die Leitung (26) saugseitig in die Zirkulationspumpe (8) mündet.

7. Haushaltgerät nach einem der vorangehenden Ansprüche, wobei es als Geschirrspüler ausgestaltet ist.

## Claims

1. Water-conducting domestic appliance, in particular dishwasher, with a tub (1) for receiving good to be cleaned, with a process water circuit comprising a circulation pipe system (15 - 20) and a circulation pump (8) in order to convey process water upwards from a lower part of the tub (1), with a heat pump (10 - 13) comprising a condenser (11) and an evaporator (13), wherein the condenser (11) is adapted to heat the process water, and wherein the condenser (11) is arranged on the circulation pipe system (15 - 20, 26) between the circulation pump (8) and the tub (1), with several mouths, through which the process water can be pumped from the circulation pipe system (15 - 20) into the tub (1), and with a branch (16) which is connected to the mouths via several connecting pipes (17 - 20), **characterised in that** a branch (24b) is arranged between the circulation pump (8) and the branch (16), from which branch (24b) a pipe (26) is branched off to the tub (1) or on the suction side to the circulation pump (8), wherein the condenser (11) is arranged in the pipe (26) and the pipe (26) is closable by a valve (25).

2. Domestic appliance according to claim 1, wherein the branch (24b) has a strainer (36), wherein process water flowing into the pipe (26) passes through the strainer (36), but not process water flowing into the connecting pipe (15).

3. Domestic appliance according to claim 2, wherein the branch (24b) has an inlet (30) and a first and a second outlet (31, 32), wherein the connecting pipe (15) connects to the first outlet (31) and the pipe (26) connects to the second outlet (32), wherein the branch (24b) between the inlet (30) and the first outlet (31) forms a pipeline (34), on the wall of which the strainer (36) is arranged.

4. Domestic appliance according to claim 3, wherein the strainer (36) has ribs (37) between which elongated strainer openings (38) for the passage of the process water are formed, wherein the ribs (37) extend substantially parallel to a longitudinal axis (39) of the pipeline (34).

5. Domestic appliance according to one of claims 3 or 4, wherein the strainer (36) is arranged flush with the wall.

6. Domestic appliance according to one of claims 2 to 5, wherein the pipe (26) opens into the tub (1), in particular into a wall (5), a bottom region (6) or a sump (7) of the tub (1), or wherein the pipe (26) opens on the suction side into the circulation pump (8).

7. Domestic appliance according to one of the preceding claims, wherein it is adapted as a dishwasher.

## Revendications

1. Appareil ménager véhiculant de l'eau, en particulier lave-vaisselle, avec une cuve (1) pour recevoir des articles à nettoyer, avec un circuit d'eau de traitement comprenant un système d'acheminement de circulation (15 - 20) et une pompe de circulation (8) pour refouler vers le haut de l'eau de traitement provenant d'une zone inférieure de la cuve (1), avec une pompe à chaleur (10 - 13) comprenant un condenseur (11) et un évaporateur (13), dans lequel le condenseur (11) est configuré pour réchauffer l'eau de traitement, et dans lequel le condenseur (11) est disposé au niveau du système d'acheminement de circulation (15 - 20, 26) entre la pompe de circulation (8) et la cuve (1), avec plusieurs embouchures, par lesquelles l'eau de traitement provenant du système d'acheminement de circulation (15 - 20) peut être pompée dans la cuve (1), et avec un embranchement (16), lequel est raccordé aux embouchures par l'intermédiaire de plusieurs conduits de raccordement (17 - 20),
**caractérisé en ce**
**qu'**est disposée entre la pompe de circulation (8) et l'embranchement (16), une bifurcation (24b), de laquelle un conduit (26) menant à la cuve (1) ou côté aspiration à la pompe de circulation (8) est déviée, dans lequel le condenseur (11) est disposé dans le conduit (26) et le conduit (26) peut être fermé avec une soupape (25).

2. Appareil ménager selon la revendication 1, dans lequel la bifurcation (24b) présente un tamis (36), dans lequel de l'eau de traitement s'écoulant dans le conduit (26) traverse le tamis (36), en revanche pas l'eau de traitement s'écoulant dans le conduit de raccordement (15).

3. Appareil ménager selon la revendication 2, dans lequel la bifurcation (24b) présente une entrée (30) et une première et une deuxième sortie (31, 32), dans lequel le conduit de raccordement (15) est connecté à la première sortie (31) et le conduit (26) est connecté à la deuxième sortie (32), dans lequel la bifurcation (24b) forme entre l'entrée (30) et la première sortie (31) un conduit tubulaire (34), au niveau de la paroi duquel le tamis (36) est disposé.

4. Appareil ménager selon la revendication 3, dans lequel le tamis (36) présente des nervures (37), entre lesquelles des ouvertures de tamis (38) allongées sont formées pour le passage de l'eau de traitement, dans lequel les nervures (37) s'étendent de manière sensiblement parallèle par rapport à un axe longitudinal (39) du conduit tubulaire (34) .

5. Appareil ménager selon l'une quelconque des revendications 3 ou 4, dans lequel le tamis (36) est disposé en affleurement par rapport à la paroi.

6. Appareil ménager selon l'une quelconque des revendications 2 à 5, dans lequel le conduit (26) débouche dans la cuve (1), en particulier dans une paroi (5), une zone de fond (6) ou un puisard (7) de la cuve (1), ou dans lequel le conduit (26) débouche côté aspiration dans la pompe de circulation (8).

7. Appareil ménager selon l'une quelconque des revendications précédentes, configuré en tant que lave-vaisselle.
